# EUROPÄISCHE PATENTSCHRIFT

(11) **EP 1 479 584 B1**
(45) Veröffentlichungstag und Bekanntmachung des Hinweises auf die Patenterteilung: **09.01.2008**
(21) Anmeldenummer: 04011721.0
(22) Anmeldetag: 18.05.2004
(51) Int. Cl.: B60T 17/00

(54) **Mehrkreisschutzventileinrichtung mit magnetventilgesteuerter Druckbegrenzersteuerung für druckluftbetätigte Aktuatoren eines Fahrzeugs**
Multi-circuit protection valve device with solenoid valve controlled pressure limiting control for compressed air operated actuators of a vehicle
Dispositif de valve de protection pour plusieurs circuits avec contrôle de limitation de pression par électrovalve pour des actionneurs commandés par air comprimé dans un véhicule

(30) Priorität: 20.05.2003 DE 10323037
(43) Veröffentlichungstag der Anmeldung: 24.11.2004
(73) Patentinhaber: KNORR-BREMSE SYSTEME FÜR NUTZFAHRZEUGE GMBH, 80809 München (DE)
(72) Erfinder: Hilberer, Eduard, 68766 Hockenheim (DE)
(74) Vertreter: Schönmann, Kurt

(56) Entgegenhaltungen:
- EP-A- 0 496 958
- EP-A- 1 122 140
- WO-A-96/34785
- DE-A- 3 514 989
- DE-A- 4 421 575
- DE-A- 19 835 638
- DE-C- 19 710 814

## Beschreibung

Die Erfindung betrifft eine Mehrkreisschutzventileinrichtung, wie sie auch für druckluftbetätigte Aktuatoren eines Fahrzeugs eingesetzt wird.

Aus der WO 96/34785 ist eine Druckluft-Versorgungseinrichtung mit einer Mehrkreisschutzventileinrichtung bekannt. Diese weist einen Eingangsanschluss zur Beaufschlagung mit Druckluft auf, wobei der Eingangsanschluss mit einem Druckluftzentralbereich in Verbindung steht. Weiterhin sind Ausgangsanschlüsse zur Abgabe von Druckluft aus dem Zentralbereich vorgesehen, wobei zwischen den Ausgangsanschlüssen und dem Zentralbereich ein Rückschlagventil angeordnet ist. Ebenfalls ist eine Steuerung mit mehreren Eingängen zur Bearbeitung von Messsignalen entsprechend den Drücken an mehreren Ausgangsanschlüssen vorgesehen. Die Steuerung hat weiterhin einen Ausgang zur Ansteuerung einer Druckregelungseinheit. Die Steuereinheit ist auch zur Speicherung von Druckreferenzwerten geeignet.

Die DE 44 21 575 A1 zeigt einen Druckluftregler für Kraftfahrzeuge. Am Druckregler ist ein Hochdruckverbraucher angeschlossen, an dem eine Luftfederung des Kraftfahrzeugs angeschlossen ist. Diese Vorrichtung hat sich im Betrieb wegen ihrer unruhigen Betriebsweise nicht bewährt. Hinzu kommt, dass ein damit betriebenes Kraftfahrzeug häufig gewartet werden muss, wobei ein erhöhter Verschleiß des an den Druckregler angeschlossenen Kompressors bemerkt wird.

Die DE 35 14 989 A1 zeigt eine Druckluftversorgungseinrichtung für Fahrzeug-Druckluftanlagen. Auch bei dieser Druckluftversorgungseinrichtung ist ein erhöhter Verschleiß und eine unruhige Betriebsweise zu beobachten, wenn diese in der Praxis eingesetzt wird.

Die DE 198 35 638 zeigt eine elektronische Druckluftaufbereitungsanläge mit einem Mehrkreisschutzventil mit daran angeschlossenen Verbraucherkreisen. Jeder Verbraucherkreis ist durch eine zugeordnete Drucksteuereinheit in einem mit Sensoren zusammenarbeitenden Druckregler separat verriegelbar. Zwischen Druckregler und den Verbraucherkreisen ist ein Druckbegrenzer vorgesehen.

Die DE 197 10 814 C1 entspricht in seinen wesentlichen Bauteilen der in der DE 44 21 575 A1 gezeigten Druckluftbeschaffungsanlage. Diese Druckluftbeschaffungsanlage weist ebenfalls Nachteile im Betrieb auf. Es ist Aufgabe der Erfindung, eine Druckluftbeschaffungsanlage sowie Komponenten hierfür und damit ausgerüstete Fahrzeuge bereitzustellen, die sich einfach, kostengünstig und verschleißarm betreiben lassen.

Diese Aufgabe wird durch die Gegenstände der unabhängigen Ansprüche gelöst. Vorteilhafte Weiterbildungen ergeben sich aus den jeweiligen abhängigen Ansprüchen.

Die Erfindung sieht eine Druckluftbremsanlage mit einer Mehrkreisschutzventileinrichtung vor. Die Mehrkreisschutzventileinrichtung ist insbesondere für druckluftbetätigte Aktuatoren eines Fahrzeugs vorgesehen. Ein Eingangsanschluß zur Beaufschlagung mit Druckluft steht mit einem Druckluftzentralbereich in Verbindung. Ein erster Ausgangsanschluß ist zur Abgabe von Druckluft aus dem Zentralbereich vorgesehen, wobei zwischen dem ersten Ausgangsanschluß und dem Zentralbereich ein Rückschlagventil angeordnet ist. Wenigstens ein zweiter Ausgangsanschluß ist zur Abgabe von Druckluft aus dem Zentralbereich vorgesehen. Eine Steuerung, die eine Steuerungsschaltung mit mehreren Eingängen zur Verarbeitung von Signalen entsprechend den Drücken an Ausgangsanschlüssen, z.B. mit einem daran angeschlossenen ersten Meßgrößenumwandler, einen Ausgang zur Ansteuerung einer Druckregelungseinheit und einen Speicher für Referenzdrücke aufweist, gibt am Ausgang je ein vorbestimmtes erstes Ansteuersignal für die Druckregelungseinheit aus, wenn der Druck an beispielsweise einem ersten Ausgangsanschluß kleiner oder größer als der erste Referenzdruck ist. Die Druckregelungseinheit beaufschlagt in Abhängigkeit des ersten Ansteuersignals den Zentralbereich bei Bedarf mit Druckluft. Die Steuerungsschaltung kann auch Messsignale entsprechend dem Druck an zweiten Ausgangsanschlüssen, z.B. mit daran angeschlossenen zweiten Meßgrößenumwandlern und einen Speicher für einen zweiten Referenzdruck aufweisen, wobei die Steuerung am Ausgang ein vorbestimmtes zweites Ansteuersignal für die Druckregelungseinheit ausgibt, wenn der Druck am zweiten Ausgangsanschluß kleiner als der zweite Referenzdruck ist, wobei die Druckregelungseinheit in Abhängigkeit des zweiten Ansteuersignals den Zentralbereich selektiv mit Druckluft beaufschlagt.

Mit der Erfindung wird der Eingangsanschluß bei Bedarf mit Druckluft beaufschlagt, wodurch sich ein besonders verschleißarmer Betrieb des Kompressors ergibt. Die Erfindung sieht das Beaufschlagen des Zentralbereichs mit Druckluft in einer sehr einfachen Ausgestaltung nur dann vor, wenn der Druck am ersten Ausgangsanschluß unterhalb eines vorbestimmten ersten Referenzwertes fällt. Eine genauere Abstufung der Druckniveaus in der Druckluftanlage läßt sich dann erreichen, wenn der Zentralbereich dann mit Druckluft beaufschlagt wird, wenn der Druck am zweiten Ausgangsanschluß unterhalb eines vorbestimmten zweiten Referenzwertes fällt.

Gemäß der Erfindung ist auch ein Kompressor vorgesehen, der ansteuerbar ist. Solche Kompressoren können beispielsweise von einem Zustand mit einem ersten Ausgangsdruck in einen Zustand zur Erzeugung eines erhöhten Ausgangsdrucks umgeschaltet werden. Es sind auch Kompressoren denkbar, die darüber hinaus in einen Zustand mit niedrigem Energieverbrauch schaltbar sind, beispielsweise mit einer Zylinderkopfsteuerungsvorrichtung (z.B. ESS) oder mit einer pneumatischen Kupplung, mit der der Kompressor selektiv vom Antriebsmotor abgekuppelt wird.

Zur Abgabe von Druckluft aus dem Zentralbereich ist ein erster Ausgangsanschluss vorgesehen, wobei zwischen dem ersten Ausgangsanschluss und dem Zentralbereich ein nur in einer Richtung durchströmbares und mit einer Feder selbsttätig verschließbares Rückschlagventil angeordnet ist. Fakultativ kann noch ein erstes Druckbegrenzungsventil im Bereich zwischen dem ersten Ausgangsanschluss und dem Zentralbereich angeordnet sein. Außerdem ist wenigstens ein zweiter Ausgangsanschluss zur Abgabe von Druckluft aus dem Zentralbereich vorgesehen, wobei zwischen dem zweiten Ausgangsanschluss und dem Zentralbereich ein zweites Druckbegrenzungsventil angeordnet ist. Mit einem solchen Druckbegrenzungsventil wird der Druck über den Zentralbereich auf ein gewünschtes Maß für den zweiten Ausgangsanschluss reduziert.

Gemäß der Erfindung gibt die Steuerung am Ausgang ein vorbestimmtes erstes Ansteuerungssignal für die Drucklufterzeugungseinheit aus, wenn der Druck am ersten Ausgangsanschluss kleiner als der erste Referenzdruck ist. Der Kompressor als Drucklufterzeugungseinheit kann in einen Zustand mit erhöhtem Ausgangsdruck geschaltet werden, wenn der Druck am ersten Ausgangsanschluss der Mehrkreisschutzventileinrichtung kleiner als der erste Referenzdruck ist. In diesem Zustand fördert die Drucklufterzeugungseinheit mit erhöhter Leistung und stellt einen Druck bereit, der demjenigen Druck entspricht, der am ersten Ausgangsanschluss abgenommen wird.

Mit einer erfindungsgemäßen Vorrichtung ist es auch möglich, den Kompressor immer mit einer niedrigeren Drehzahl bzw. mit einer niedrigeren Leistung zu betreiben, wenn nur der niedrigere Druck für den zweiten Ausgangsanschluss benötigt wird. Wenn die Steuerung abtastet, dass der Druck am ersten Ausgangsanschluss unterhalb des Referenzdrucks abgefallen ist, dann wird der Kompressor auf erhöhte Drehzahl bzw. erhöhte Leistung für erhöhten Druck geschaltet. In diesem Zustand pumpt der Kompressor dann den Zentralbereich und den daran anliegend angeordneten ersten Ausgangsanschluss auf den erhöhten Druck auf, bis der erste Referenzdruck überschritten wird. Danach schaltet der Kompressor wieder auf den "Normalbetrieb" zurück, in dem er besonders verschleißarm betrieben werden kann. Das zwischen dem ersten Ausgangsanschluss und dem Zentralbereich angeordnete Rückschlagventil stellt dabei sicher, dass am ersten Ausgangsanschluss der erhöhte Druck aufrecht erhalten wird, selbst wenn der Druck im Zentralbereich auf Drücke unterhalb des ersten Referenzdrucks absinkt. Dies kann vorkommen, wenn an einem zweiten Ausgangsanschluss Druckluft abgenommen wird, beispielsweise durch einen hierfür vorgesehenen Verbraucher.

Die erfindungsgemäße Vorrichtung hat sich besonders im Zusammenhang mit Aktuatoren bewährt, die einen hohen Betriebsdruck aufweisen und dabei im Vergleich zu anderen Aktuatoren nur einen relativ geringen Druckluftverbrauch aufweisen.

Solche Anwendungen ergeben sich beispielsweise dann, wenn bei Kraftfahrzeugen eine Luftfederung mit dem ersten Ausgangsanschluss der Mehrkreisschutzventileinrichtung verbunden ist. Solche Luftfederungen werden tendenziell mit immer kleinerem Volumen gebaut, so dass diese mit höheren Drücken betrieben werden müssen. Solche Luftfederungen können Betriebsdrücke von 15 bar und darüber aufweisen, wobei diese nur einen relativ geringen Betriebsverbrauch haben. Vor allem beim Anlassvorgang des betreffenden Fahrzeugs oder wenn bei der Änderung eines Betriebszustands des Fahrzeugs dessen Fahrhöhe verändert werden muss, muss zusätzliche Druckluft in dem Bereich des ersten Ausgangsanschlusses gefördert werden, wofür ein erhöhter Druck notwendig ist. Nachdem die Beaufschlagung des ersten Ausgangsanschlusses mit Druckluft mit höherem Druck fertiggestellt ist, wird die Drucklufterzeugungseinheit in einen Zustand mit "normalem" Energieverbrauch geschaltet, in der sie nur Druckluft mit geringerem Druck erzeugt.

Die Erfindung sieht auch vor, dass die Steuerung mehrere Eingänge, z.B. mit wenigstens einem daran angeschlossenen zweiten Messgrößenumwandler für den Druck am zweiten Ausgangsanschluss des Zentralbereichs aufweist. Weiterhin ist ein Speicher für einen zweiten Referenzdruck vorgesehen, wobei der zweite Referenzdruck mit dem vom zweiten Messgrößenumwandler gelieferten Druck verglichen werden kann. Die Steuerung gibt dabei am Ausgang ein vorbestimmtes erstes Ansteuersignal für die Drucklufterzeugungseinheit aus, wenn der Druck am ersten Ausgangsanschluss kleiner als der erste Referenzdruck ist und wenn der Druck am zweiten Ausgangsanschluss größer als der zweite Referenzdruck ist. Die Steuerung gibt am Ausgang ein vorbestimmtes zweites Ansteuersignal für die Drucklufterzeugungseinheit aus, wenn der Druck am ersten Ausgangsanschluss größer als der erste Referenzdruck ist und wenn der Druck am zweiten Ausgangsanschluss größer als der zweite Referenzdruck ist. Mit einer solchen Ausgestaltung kann ein besonders energiesparender Betrieb einer Druckluftbremsanlage erreicht werden, wenn ein Kompressor vorgesehen ist, der sich in einen energiesparenden Zustand schalten lässt. Sobald nämlich die Steuerung detektiert, dass sowohl der Druck am ersten Ausgangsanschluss größer als der erste Referenzdruck ist und auch der Druck am zweiten Ausgangsanschluss größer als der zweite Referenzdruck ist, dann braucht die Drucklufterzeugungseinheit keine Druckluft in den Zentralbereich fördern. In einem solchen Zustand genügt es, wenn die Drucklufterzeugungseinheit, die beispielsweise als Kompressor ausgebildet sein kann, über besondere hierfür vorgesehene Kanäle Druckluft lediglich im Bereich eines Zylinderkopfs hin- und herbewegt. Dies ist gegenüber einem Ausblasen aus einem Auslassbereich der Druckluftbremsanlage erheblich energiesparender.

Durch die vorstehend geschilderte Ausgestaltung gliedert sich die Druckluftbremsanlage in einen ersten Druckbereich mit höherem Betriebsdruck im Bereich des ersten Ausgangsanschlusses, der mit einem Rückschlagventil gegenüber dem Zentralbereich gegen Druckverlust abgesichert ist. Außerdem ist ein zweiter Druckbereich mit gegenüber dem ersten Druckbereich niedrigerem Druckniveau vorgesehen, und zwar im Bereich des zweiten Ausgangsanschlusses. Durch das zweite Druckbegrenzungsventil ist dabei sichergestellt, dass der Druck im zweiten Druckbereich nicht über einen vorbestimmten Druck hinaus ansteigt.

Dieses vorstehend erläuterte Prinzip lässt sich auch modular erweitern, indem mehrere Druckniveaus in der Anlage vorgesehen werden. Beispielsweise kann ein dritter Ausgangsanschluss vorgesehen werden, dessen Druckniveau niedriger als das erste Druckniveau und das zweite Druckniveau ist, wenn im Bereich des dritten Ausgangsanschlusses ein drittes Druckbegrenzungsventil angeordnet ist.

In einer Ausgestaltung der Erfindung kann zwischen einem zweiten, dritten etc. Ausgangsanschluß und dem Zentralbereich eine Druckbegrenzungseinrichtung vorgesehen sein, die von der Steuerung außer Kraft setzbar ist, wenn ein Füllen nur bis zu einem niedrigeren Druckniveau beabsichtigt ist. Damit kann auf Auslegungsschwierigkeiten von Drucksensoren reagiert werden, wenn die Bremsanlage auf verschiedenen Druckniveaus betrieben wird. Dies tritt häufig dann auf, wenn die Druckbegrenzungseinrichtung einen internen Druckabfall bewirkt und wenn der Drucksensor hinter der Druckbegrenzungseinrichtung angeordnet ist. Durch die Betätigung kann dann ein etwaiges notwendiges "Offset" des Sensors vermieden werden.

Selbstverständlich werden auch übliche Bauteile wie beispielsweise integrierte Trockner mit einem Regenerationskreis, Filter, Rückschlagventile zum Versorgungsanschluss und Reifenfülleinrichtungen vorgesehen.

Mit der Erfindung lässt sich eine Mehrkreisschutzventileinrichtung und eine Bremsanlage bereitstellen, bei der auf einfache Weise alle Komponenten elektronisch ansteuerbar sind. Es ist möglich, kleine Aktuatoren vorzusehen, die mit höheren Drücken gefahren werden, als im gleichen Bereich vorgesehene Aktuatoren, die nur einen geringeren Druck benötigen. Das erfindungsgemäße Umschalten der Drucklufterzeugungseinheit gestattet es darüber hinaus, diese relativ klein zu dimensionieren, was Kostenvorteile mit sich bringt. Im Betrieb der erfindungsgemäßen Mehrkreisschutzventileinrichtung hat sich darüber hinaus herausgestellt, dass ein besonders ruhiger Betrieb gewährleistet wird. Dies wird gemäß der Erfindung unter anderem darauf zurückgeführt, dass diejenigen Bereiche um Ausgangsanschlüsse mit hohem Druckniveau druckmäßig von denjenigen Bereichen um Ausgangsanschlüsse mit niedrigerem Druckniveau entkoppelt werden. Darauf hat das erfindungsgemäß zwischen dem ersten Ausgangsanschluss und dem Zentralbereich vorgesehene Rückschlagventil einen nicht vernachlässigbaren Einfluss.

Die Erfindung ist in der Zeichnung anhand von Ausführungsbeispielen näher veranschaulicht.
- Figur 1: zeigt eine schematische Darstellung einer Druckluftanlage eines Fahrzeugs und
- Figur 2: zeigt eine schematische Darstellung einer Druckluftanlage eines weiteren Fahrzeugs.
- Figur 3: zeigt eine schematische Darstellung einer Druckluftanlage eines weiteren Fahrzeugs,
- Figur 4: zeigt Diagramme, die den Betrieb der Druckluftanlage aus Figur 3 in einem Niederdruckbetrieb veranschaulichen und
- Figur 5: zeigt Diagramme, die den Betrieb der Druckluftanlage aus Figur 3 in einem Hochdruckbetrieb veranschaulichen.

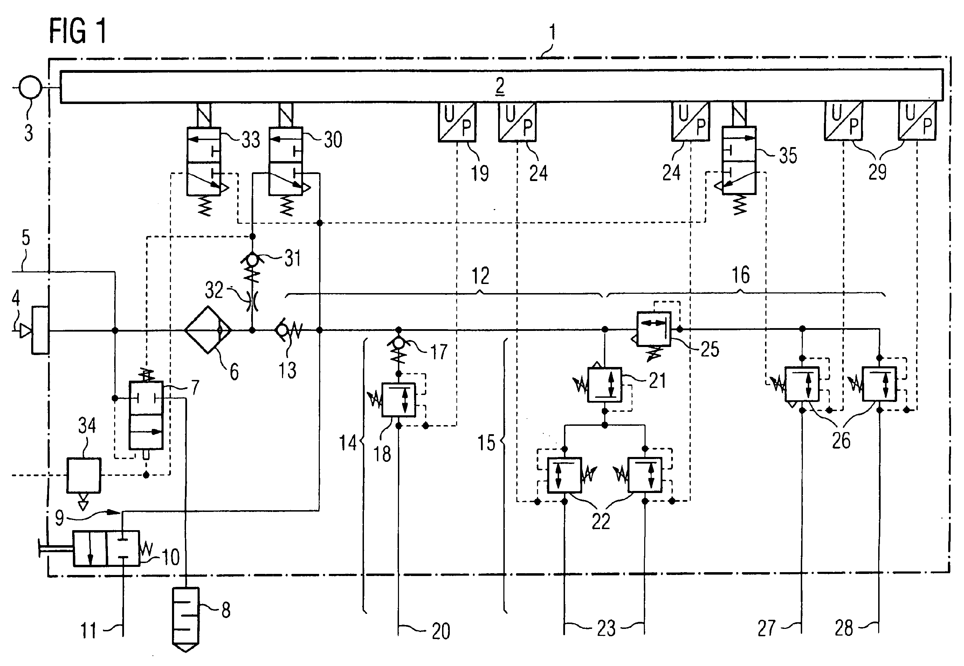

Figur 1 zeigt einen Teil einer ersten Druckluftanlage eines in dieser Ansicht nicht gezeigten Fahrzeugs. In der einzigen Figur ist dabei eine Mehrkreisschutzventileinrichtung 1 mit strichpunktierter Linie schematisch dargestellt. Die Mehrkreisschutzventileinrichtung 1 hat ein in dieser Ansicht nicht gezeigtes metallisches Gehäuse, in dem zahlreiche Druckluftkanäle und Aufnahmen für Magnetventile und andere mechanische Ventileinrichtungen vorgesehen sind. Außerdem ist eine Steuerung 2 vorgesehen, im Beispiel als elektronische Steuerung, die über einen Zentralstecker 3 mit der Elektrik des Fahrzeugs in Verbindung steht. Selbstverständlich lässt sich die Steuerung auch anders realisieren, z.B. pneumatisch, hydraulisch oder elektrohydraulisch unter Verwendung der jeweils erforderlichen Wandler, damit die Steuerung Messsignale erarbeiten kann, die aus den Drücken in den Ausgangsanschlüssen abgeleitet sind.

Die Mehrkreisschutzventileinrichtung 1 hat einen Eingangsanschluss 4 für einen in dieser Ansicht nicht gezeigten Kompressor, der über die Fahrzeugelektrik mit der Steuerung 2 in Verbindung steht. Der Kompressor kann dabei zwischen mehreren Druckstufen hin- und hergeschaltet werden. In einer ersten Druckstufe liefert der Kompressor Druckluft mit einem Druck von ca. 13 bar. In einer zweiten Druckstufe liefert der Kompressor Druckluft mit einem Druck von ca. 15,5 bar.

Parallel zum Eingangsanschluss 4 ist ein Versorgungsanschluss 5 vorgesehen, in dem die Mehrkreisschutzventileinrichtung separat mit Druckluft beaufschlagt werden kann.

Im Eingangsbereich der Mehrkreisschutzventileinrichtung 1 ist noch ein Lufttrockner 6 sowie eine an sich bekannte Druckregelungseinrichtung 7 als 2/2-Wegeventil vorgesehen. Die Druckregelungseinrichtung 7 steht dabei mit einer Entlüftungseinheit 8 in Verbindung.

Weiterhin ist im Eingangsbereich der Mehrkreisschutzventileinrichtung 1 eine Reifenfülleinrichtung 9 vorgesehen, die sich ausgehend von einer Leitung hinter dem Lufttrockner 6 in ein manuell betätigbares und als 2/2-Wegeventil ausgebildetes Reifenfüllventil 10 mit einem Reifenfüllanschluss 11 gliedert.

Unmittelbar an den Eingangsbereich der Mehrkreisschutzventileinrichtung 1 schließt sich ein Zentralbereich 12 als pneumatische Leitung an diesen an, und zwar durch ein Rückschlagventil 13 vom Eingangsbereich getrennt.

Vom Zentralbereich 12 aus erstrecken sich jeweils über pneumatische Leitungen ein Luftfederungsbereich 14, ein Betriebsbremsbereich 15 sowie ein Feststellbrems- und Nebenverbraucherbereich 16. Dabei hat der Luftfederungsbereich 14 ein Druckniveau von ca. 15 bar, der Betriebsbremsbereich 15 hat ein Druckniveau von ca. 12,5 bar und der Feststellbrems- und Nebenverbrauchsbereich 16 hat ein Druckniveau von ca. 8,5 bar.

Der Luftfederungsbereich 14 gliedert sich in ein Rückschlagventil 17, in ein Überströmventil 18, das als Sicherheitsventil ausgebildet ist, in eine Druck/Spannungswandeleinheit 19, die mit der Steuerung 2 in Verbindung steht, sowie in einen Luftfederungsanschluss 20, der mit einer in dieser Ansicht nicht gezeigten Luftfederung des Fahrzeugs verbunden ist. Die Druck/Spannungswandeleinheit 19 übermittelt den am Luftfederungsanschluss herrschenden Druck als Spannungswert an die Steuerung 2.

Der Betriebsbremsbereich 15 weist ein Druckbegrenzungsventil 21 sowie zwei als Sicherheitsventile ausgebildete Überströmventile 22 auf. Außerdem sind zwei Betriebsbremsanschlüsse 23 vorgesehen, deren Druckniveau mit je einer Druck/Spannungswandeleinheit 24 an die Steuerung 2 übermittelt wird.

Der Feststellbrems- und Nebenverbrauchsbereich 16 gliedert sich in ein Druckbegrenzungsventil 25, an das sich zwei als Sicherheitsventile ausgebildete Überströmventile 26 anschließen, die jeweils zu einem Feststellbremsanschluss 27 und einem Nebenverbrauchsanschluss 28 führen.

Außerdem ist noch ein Regeneratorkreis mit einem durch die Steuerung 2 betätigbaren 2/2-Wegeventil 30, mit einem Rückschlagventil 31 und mit einer Drossel 32 vorgesehen, mit dem das Rückschlagventil 13 durch die Steuerung 2 betätigbar entgegen seiner Durchflußrichtung überbrückt werden kann.

Mit einem elektropneumatischen Kreis, der ein durch die Steuerung 2 betätigbares 2/2-Wegeventil 33 aufweist, kann die Steuerung 2 die Druckregelungseinrichtung 7 selektiv so mit Druckluft aus dem Zentralbereich 12 versorgen, daß der Eingangsanschluß 4 mit der Entlüftungseinheit 8 verbunden wird. In der in der Figur gezeigten Ausführungsform ist eine EnergySavingSystem-Einheit 34 an das 2/2-Wegeventil 33 angeschlossen, mit dem der Kompressor in einen besonders energiesparenden Zustand geschaltet werden kann, in dem Druckluft im Inneren des Zylinderkopfes des Kompressors zirkuliert, um Reibungsverluste beim Ausblasen über die Entlüftungseinheit 8 zu vermeiden.

In einer hier nicht dargestellten Ausführungsform weist die EnergySavingSystem-Einheit noch eine pneumatische Kupplung auf, mit der der Kompressor von dem antreibenden Motor abgekuppelt werden kann.

Schließlich ist noch ein als 2/2-Wegeventil ausgebildetes und durch die Steuerung 2 betätigbares Unterstützungsventil 35 vorgesehen, mit dem unter Anwendung von Druckluft aus dem Zentralbereich 12 selektiv das Überströmventil 26 beaufschlagt und zum Schließen veranlasst werden kann.

Im Betrieb verhält sich die erfindungsgemäße Bremsanlage des Fahrzeugs wie folgt.

In einem Ausgangszustand vor dem Anlassen des Fahrzeugs ist die Mehrkreisschutzventileinrichtung 1 frei von jeglicher Druckluft. In diesem Zustand wird über den Eingangsanschluss 4 durch den mit dem Motor des Fahrzeugs angetriebenen Kompressor Druckluft zugeführt. Diese Druckluft wird im Lufttrockner 6 getrocknet und gelangt durch das Rückschlagventil 13 hindurch in den Zentralbereich 12. Von dort aus durchtritt die Druckluft im Luftfederungsbereich 14 das Rückschlagventil 17 und das Überströmventil 18, bis am Luftfederungsanschluss 20 derselbe Druck herrscht, wie im Zentralbereich 12. Vom Zentralbereich 12 aus tritt Druckluft weiterhin in das Druckbegrenzungsventil 21 des Betriebsbremsbereichs 15 ein, worauf sie die Überströmventile 22 durchtritt und in die Betriebsbremsanschlüsse 23 eintritt. Das Druckbegrenzungsventil 21 stellt dabei sicher, dass an den Betriebsbremsanschlüssen 23 nur ein Druck von ca. 12,5 bar anliegt. Auf dieselbe Weise tritt vom Zentralbereich 12 aus Druckluft in den Feststellbrems- und Nebenverbrauchsbereich 16 ein. Dabei stellt das Druckbegrenzungsventil 25 sicher, dass am Feststellbremsanschluss 27 und am Nebenverbrauchsanschluss 28 kein höherer Druck als 8,5 bar anliegt.

Sobald im Luftfederungsanschluss 20 der vorbestimmte Betriebsdruck von 15 bar erreicht ist, betätigt die Steuerung 2 das 2/2-Wegeventil 33, worauf die Druckregelungseinrichtung 7 in einen Durchgangszustand geschaltet wird, in dem der Eingangsanschluß 4 mit der Entlüftungseinheit 8 verbunden wird. Gleichzeitig wird die EnergySavingSystem-Einheit 34 (ESS) aktiviert. Dadurch wird der Kompressor geschont, weil geringerer mechanischer Verschleiß auftritt.

Daraufhin schaltet die Steuerung 2 das 2/2-Wegeventil 30 durch, worauf sich ein kleiner Druckluftstrom ausgehend vom Zentralbereich 12 über das Rückschlagventil 31 und über die Drossel 32 einstellt, der den Lufttrockner 6 entgegengesetzt zu der vorher vorherrschenden Strömungsrichtung durchströmt und dabei regeneriert. Die dabei anfallende feuchte Luft strömt über die Druckregelungseinrichtung 7 und über die Entlüftungseinheit 8 nach außen ins Freie ab.

Sobald an den Betriebsbremsanschlüssen 23 der vorgegebene Referenzdruck unterschritten wird, tastet dies die Steuerung 2 über die Druck/Spannungswandeleinheit 24 ab. Der Kompressor wird von dem Zustand mit niedrigem Energieverbrauch wieder auf einen Förderzustand geschaltet. Die Druckregeleinrichtung 7 wird geschlossen. Der Kompressor fördert Druckluft in den Zentralbereich 12 und in den Betriebsbremsbereich 15. Sobald an den Betriebsbremsanschlüssen 23 wieder der vorgegebene Referenzdruck anliegt, wird der Kompressor wieder in einen Zustand mit niedrigem Energieverbrauch geschaltet, in dem Luftströme lediglich im Zylinderkopf des Kompressors hin- und hergeleitet werden. Außerdem wird die Druckregeleinrichtung 7 wieder geöffnet.

Sobald Feststellbremsanschluß 27 und/oder am Nebenverbrauchsanschluß 28 der vorgegebene Referenzdruck unterschritten wird, tastet dies die Steuerung 2 über die Druck/Spannungswandeleinheiten 29 ab. Der Kompressor wird von dem Zustand mit niedrigem Energieverbrauch wieder auf einen Förderzustand geschaltet. Die Druckregeleinrichtung 7 wird geschlossen. Der Kompressor fördert Druckluft in den Zentralbereich 12 und in den Feststellbrems- und Nebenverbrauchsbereich 16. Sobald am Feststellbremsanschluß 27 bzw. am Nebenverbrauchsanschluß 28 wieder der vorgegebene Referenzdruck anliegt, wird der Kompressor wieder in einen Zustand mit niedrigem Energieverbrauch geschaltet, in dem Luftströme lediglich im Zylinderkopf des Kompressors hin- und hergeleitet werden. Außerdem wird die Druckregeleinrichtung 7 wieder geöffnet.

Die erfindungsgemäße Bremsanlage verhält sich im Betrieb sehr stellgrößenruhig, was den Betrieb des Kompressors angeht. Druckluftabnahmen aus dem Zentralbereich 12 über die Betriebsbremsanschlüsse 23 bzw. über den Feststellbremsanschluss 27 oder den Nebenverbrauchsanschluss 28 veranlassen den Kompressor dazu, Druckluft in dem jeweils dafür benötigten Druckniveau von 12,5 bar nachzuliefern. Der Luftfederungsanschluss 20 bleibt von solchen Druckluftentnahmen unbelastet. Erst wenn die Steuerung 2 eine Anforderung von zusätzlicher Druckluft im Luftfederungsanschluss 20 abtastet, wird der Kompressor wieder in einen Zustand mit erhöhter Förderleistung für einen erhöhten Luftdruck geschaltet. Sobald diese Anforderung nicht mehr vorliegt, wird der Kompressor wieder zurück in einen Betriebszustand für einen Normaldruck bzw. in einen Betriebszustand mit energiesparendem Betrieb geschaltet.

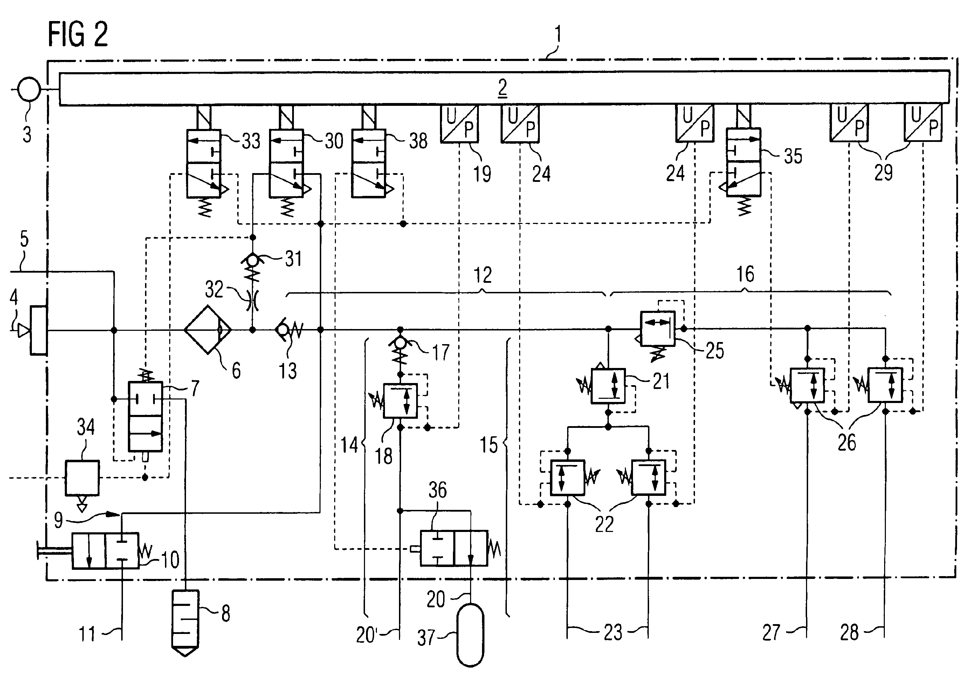

Figur 2 zeigt einen Teil einer zweiten Druckluftanlage eines in dieser Ansicht nicht gezeigten weiteren Fahrzeugs. Die Druckluftanlage stimmt in weiten Teilen mit der Druckluftanlage aus Figur 1 überein. Gleiche Teile haben dieselben Bezugsziffern.

Zusätzlich ist hier am Ausgang des Überströmventils 18 ein Abzweig zu einem Aktuatoranschluß 20' sowie ein 2/2-Wegeventil 36 vorgesehen, das einen Aktuatorvorratsbehälter 37 beaufschlagt.

Zur Ansteuerung des 2/2-Wegeventils 37 ist ein mit der Steuerung 2 ansteuerbar verbundenes 2/2-Wegeventil 38 vorgesehen.

Mit diesen zusätzlichen Komponenten können bei Anforderung einer Fahrzeughöhenverstellung die Aktuatoren des Fahrzeugs über den Aktuatoranschluß 20' direkt mit Druckluft versorgt werden. Das 2/2-Wegeventil 36 wird dabei ausgehend von dem in Fig. 2 gezeigten Zustand in einen gesperrten Zustand umgeschaltet, so dass der Aktuatorbehälter 37 vom Überströmventil 18 abgekoppelt ist. Bei einer Erhöhung des Drucks im Zentralbereich 12 wird daraufhin Druckluft direkt in den Aktuator-anschluß 20' gepumpt, was die Aktuatoren zu einer Verstellung veranlasst. Durch geeignete Maßnahmen wird dabei sichergestellt, dass keine Druckluft von den Aktuatoren zum Aktuatorbehälter strömt. Im Vergleich zum Verstellen der Aktuatoren unter Zwischenschaltung des Aktuatorbehälters 37 werden hier geringere Luftmengen benötigt, was den Kompressor schont.

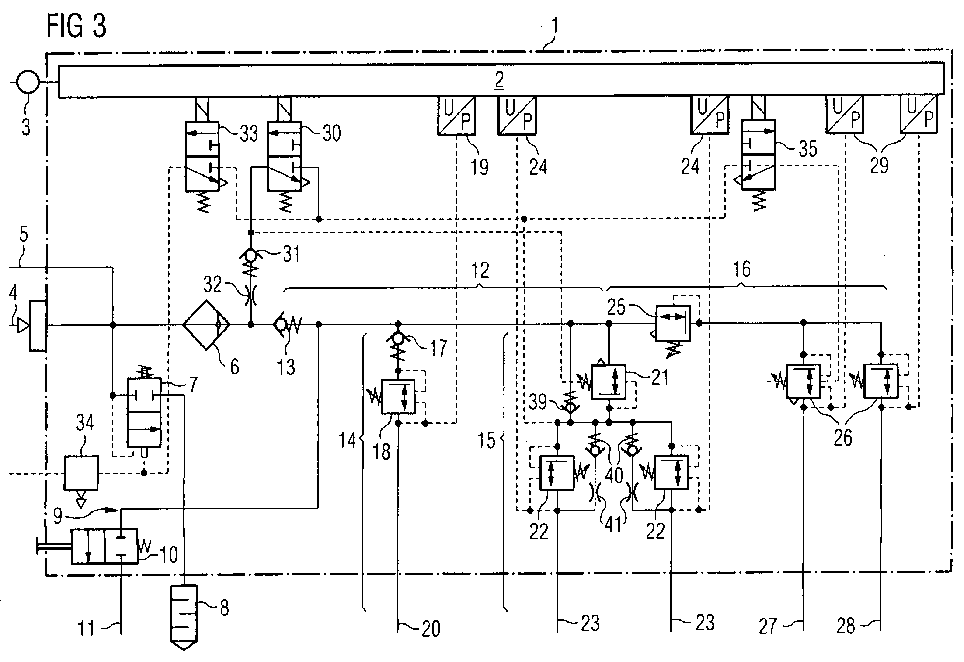

Figur 3 zeigt einen Teil einer dritten Druckluftanlage eines in dieser Ansicht nicht gezeigten Fahrzeugs. Die Druckluftanlage in Figur 3 stimmt in vielen Teilen mit derjenigen aus Figur 1 überein. Gleiche Teile haben dieselben Bezugsziffern.

Anders als in Figur 1 ist die Druckregelungseinrichtung 7 selektiv nicht so mit dem Zentralbereich 12 verbindbar, daß der Eingangsanschluß 4 aufgrund der Betätigung des 2/2-Wegeventils 33 mit der Entlüftungseinheit 8 verbunden wird. Dafür ist die entsprechende Steuerleitung in den Federraum des Druckbegrenzungsventils 21 geführt.

Anders als in Figur 1 kann das Rückschlagventil 13 nicht durch die Steuerung 2 betätigbar entgegen seiner Durchflußrichtung überbrückt werden, indem das 2/2-Wegeventil 30 betätigt wird. Die entsprechende Verbindungsleitung zwischen dem Ausgang des 2/2-Wegeventils 30 und dem Ausgang des Rückschlagventils 13 ist weggelassen. Dafür ist eine verbindende Steuerleitung zwischen dem Ausgang des Rückschlagventils 31 und den Eingängen der Überströmventile 22 im Betriebsbremsbereich 15 vorgesehen. Dies gestattet einen Betrieb der 2/2-Wegeventile 30, 33 und 35 mit dem niedrigeren Druckniveau hinter dem Druckbegrenzungsventil 21, wodurch kleinere 2/2-Wegeventile als in Figur 1 verwendet werden können.

Die Eingänge dieser Überströmventile 22 stehen zusätzlich über ein Rückschlagventil 39 mit der Hauptleitung des Zentralbereichs 12 in Verbindung. Die Überströmventile 22 sind außerdem durch je eine "Bypass"-Kombination aus Rückschlagventil 40 und Drossel 41 überbrückt.

Anders als in Figur 1 unterstützt das von der Steuerung 2 betätigte Unterstützungsventil 35 selektiv das Überströmventil 26 zum Öffnen und nicht zum Schließen.

Die erfindungsgemäße Bremsanlage gemäß Figur 3 läßt sich auf einfache Weise sowohl in einem Niederdruckbetrieb bei Beaufschlagung mit ca. 12-12,5 bar als auch in einem Hochdruckbetrieb mit 15 bar betreiben.

Im Betrieb verhält sich die erfindungsgemäße Bremsanlage des Fahrzeugs dabei wie folgt.

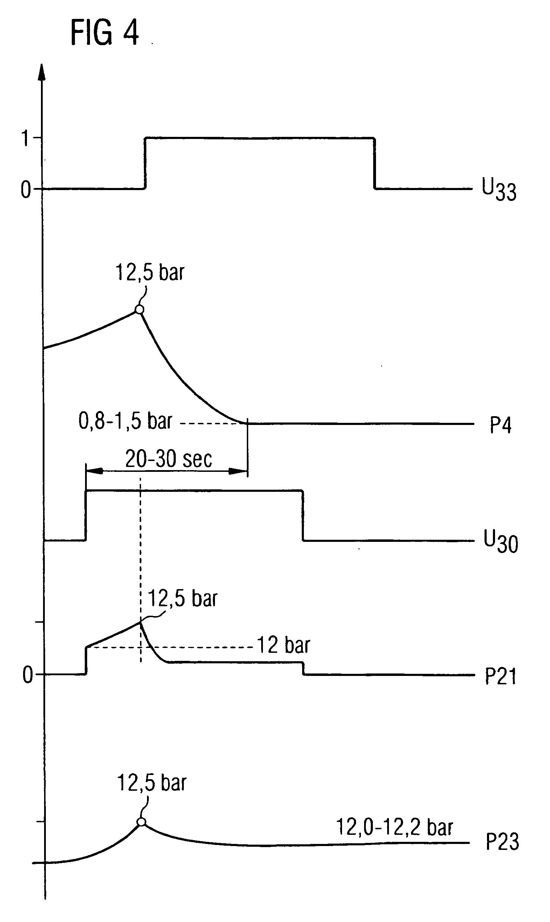

Figur 4 veranschaulicht einen Niederdruckbetrieb dieser Bremsanlage.

Die Kurve U33 zeigt den zeitlichen Verlauf des Schaltzustands des 2/2-Wegeventils 33, das bei "1" aktiviert ist. Die Kurve darunter zeigt den Druck p4 am Anschluß 4 in der Förderleitung des nicht gezeigten Kompressors. Die nächste Kurve zeigt den Schaltzustand U30 des 2/2-Wegeventils 30, das bei "1" aktiviert ist. Darunter ist der Druckverlauf p21 in der Schaltkammer des Druckbegrenzungsventils 21 gezeigt. Wiederum darunter ist der Druckverlauf p23 gezeigt, der sich an den Betriebsbremsanschlüssen 23 einstellt.

In einem Ausgangszustand vor dem Anlassen des Fahrzeugs ist die Mehrkreisschutzventileinrichtung 1 frei von jeglicher Druckluft. In diesem Zustand wird über den Eingangsanschluss 4 durch den mit dem Motor des Fahrzeugs angetriebenen Kompressor Druckluft zugeführt, wie obenstehend beschrieben ist.

Sobald die Druck/Spannungswandlereinheit 24 in den Betriebsbremsanschlüssen 23 den vorbestimmten Betriebsdruck von 12,5 bar detektiert, betätigt die Steuerung 2 das 2/2-Wegeventil 33, worauf die Druckregelungseinrichtung 7 in einen Durchgangszustand geschaltet wird, in dem der Eingangsanschluß 4 mit der Entlüftungseinheit 8 verbunden wird. Dadurch bricht der Druck in der Förderleitung zusammen, und zwar einer Hyperbel folgend gegen einen Staudruck von ca. 0,8 bis 1,5 bar, der von dem Fördervolumen des Kompressors und den Reibungsverlusten der Luft abhängt.

Kurz bevor dieser Abschaltpunkt erreicht ist, beispielsweise 10 oder 20 Sekunden vorher, wird das 2/2-Wegeventil 30 aktiviert, wie man an der Kurve U30 sieht. Man kann dieses 2/2-Wegeventil 30 auch schon zu Beginn der Förderphase des Kompressors aktivieren, wenn man von einem vorhergehenden Förderzyklus kommt. Dadurch baut sich schon vor dem Abschalten ein Druck in der Rückkammer des Druckbegrenzungsventils 21 auf, der dem Druck am Eingangsanschluß 4 entspricht. Dieser Druck rückt das Druckbegrenzungsventil 21 aus und setzt es außer Kraft. Dadurch wird es ermöglicht, dass der Druck im Betriebsbremsanschluss auf 12-12,5 bar hochgepumpt wird. Das Druckbegrenzungsventil 21 ist also nicht mehr "im Weg" sondern vielmehr deaktiviert. Beim Erreichen des richtigen Betriebsdrucks misst dies der Sensor 24 und die Steuerung 2 schaltet die Förderung von Druckluft ab. Das 2/2-Wegeventil bleibt dann weiter erregt, und zwar auch während der Abschaltphase. Dies erfolgt auch zur Regeneration, die nur in dem Bereich zwischen der Kurve p21 und der eingezeichneten Strichlinie möglich ist, weil nur dann kein Gegendruck ansteht und weil nur hier die Förderleitung auf Druckniveau "Null" ist.

Danach wird abgewartet, bis der Einschaltdruck der Anlage für den nächsten Fördervorgang wieder erreicht ist.

Mit anderen Worten wird das Druckbegrenzungsventil 21 schon vor dem Erreichen des Enddrucks ausgerückt, wodurch ein Nachfördern in das Druckbegrenzungsventil 21 noch während der Förderphase ermöglicht wird.

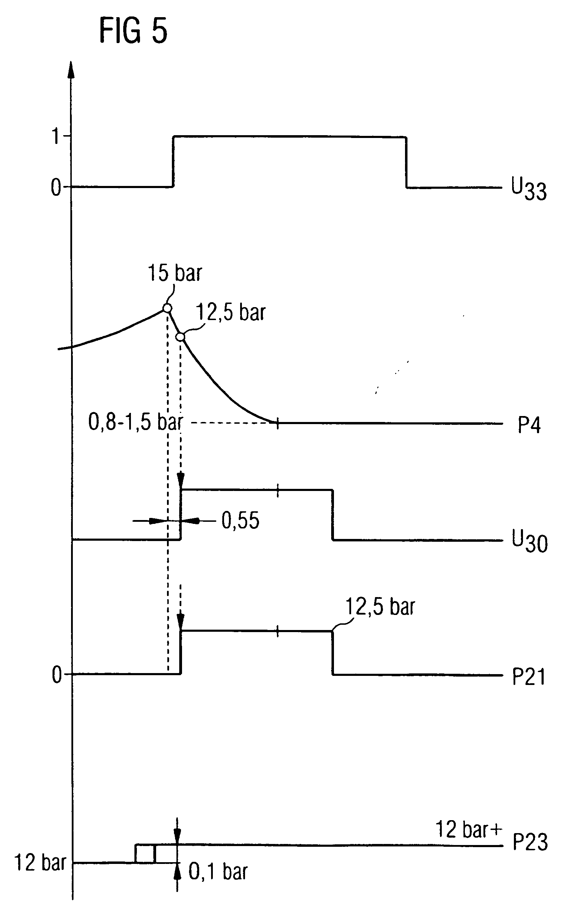

Figur 5 veranschaulicht einen Hochdruckbetrieb der Bremsanlage aus Figur 3.

Im Hochdruckbetrieb soll das oben beschriebene Ausrücken des Druckbegrenzungsventils 21 nicht erfolgen, denn das Druckbegrenzungsventil 21 soll sicherstellen, dass die Betriebsbremsanschlüsse 23 vor hohem Druck geschützt werden, um ein Platzen der Bremsaktuatoren zu vermeiden. Das Druckbegrenzungsventil 21 hat dabei die im Vordergrund stehende Aufgabe des "Regenerierens", das auch bei einem Druckniveau von 15 bar funktionieren soll.

Die Erfindung schaltet das Druckbegrenzungsventil 21 nicht willkürlich ein und aus, sondern wählt einen anderen Weg.

Das erste Diagramm in Figur 5 zeigt das Erreichen der Abschaltphase bei 15 bar, wo das 2/2-Wegeventil 33 aktiviert wird (Kurve U33). Darunter ist der Druckverlauf p4 gezeigt. Das 2/2-Wegeventil 30 als Regenerationsmagnetventil wird beim Erreichen des Abschaltdrucks von 15 bar aber noch nicht sofort geschaltet, sondern etwas später, beispielsweise 0,4 - 0,5 Sekunden später (Kurve U30), nämlich wenn der Druck in der Förderleitung unterhalb des Begrenzungsdrucks des Druckbegrenzungsventils 21 von bis 12,5 bar ist. Dann ist auch sichergestellt, dass das Rückschlagventil 13 geschlossen ist, so dass nicht mehr gefördert wird. Das 2/2-Wegeventil 30 wird also ca. 0,5 - 0,6s später angezogen, das Druckbegrenzungsventil 21 wird auch außer Kraft gesetzt, aber da nicht mehr gefördert wird, hat dies keine schädlichen Auswirkungen. Der Druck im Rückraum des Druckbegrenzungsventils 21 entspricht dem Staudruck, der in der Förderleitung noch anliegt.

Der Druckverlauf p23 wird sich durch das Aktivieren des Druckbegrenzungsventils 21 noch etwas erhöhen, nämlich um ca. 0,1 bar. Diese Druckerhöhung wird aber in sehr kurzer Zeit durch die Regeneration wieder abgebaut, die dann aktiv wird.

Mit anderen Worten wird das Druckbegrenzungsventil 21 erst dann ausgerückt, wenn der Kompressor ausgeschaltet ist und wenn der Druck im Bereich 14 unterhalb von 12 bar liegt.

## Patentansprüche

1. Mehrkreisschutzventileinrichtung (1) insbesondere für druckluftbetätigte Aktuatoren eines Fahrzeugs, die die folgenden Merkmale aufweist:
- wenigstens einen Eingangsanschluß (4) zur Beaufschlagung mit Druckluft, wobei der Eingangsanschluß (4) mit einem Druckluftzentralbereich (12) in Verbindung steht,
- wenigstens einen ersten Ausgangsanschluß (20) zur Abgabe von Druckluft aus dem Zentralbereich (12), wobei zwischen dem ersten Ausgangsanschluß (20) und dem Zentralbereich (12) ein Rückschlagventil (17) angeordnet ist,
- wenigstens einen zweiten Ausgangsanschluß (23; 27, 28) zur Abgabe von Druckluft aus dem Zentralbereich (12),
- eine Steuerung (2), die mehrere Eingänge zur Verarbeitung von Messsignalen entsprechend den Drücken am ersten Ausgangsanschluß (20) und dem wenigstens einen zweiten Ausgangsanschluß (23; 27, 28), einen Ausgang zur Ansteuerung einer Druckregelungseinheit (7) und einen Speicher für einen ersten und wenigstens einen zweiten Referenzdruck aufweist,
wobei die Steuerung (2) am Ausgang ein vorbestimmtes erstes Ansteuersignal für die Druckregelungseinheit (7) ausgibt, wenn der Druck am ersten Ausgangsanschluß (20) kleiner als der erste Referenzdruck ist, wobei die Druckregelungseinheit (7) in Abhängigkeit des ersten Ansteuersignals eine solche Schaltstellung einnimmt, dass der Zentralbereich (12) mit Druckluft beaufschlagt wird, und wobei die Steuerung (2) am Ausgang wenigstens ein vorbestimmtes zweites Ansteuersignal für die Druckregelungseinheit (7) ausgibt, wenn der Druck an dem wenigstens einen zweiten Ausgangsanschluß (23; 27, 28) kleiner als der wenigstens eine zweite Referenzdruck ist, wobei die Druckregelungseinheit (7) in Abhängigkeit des wenigstens einen zweiten Ansteuersignals eine solche Schaltstellung einnimmt, dass den Zentralbereich (12) mit Druckluft beaufschlagt wird.

2. Mehrkreisschutzventileinrichtung nach Anspruch 1,
**dadurch gekennzeichnet, dass**
zwischen einem zweiten Ausgangsanschluß (23; 27, 28) und dem Zentralbereich (12) eine Druckbegrenzungseinrichtung (21) vorgesehen ist, die von der Steuerung (2) außer Kraft setzbar ist.

3. Druckluftbremsanlage für ein Fahrzeug, insbesondere ein Schienenfahrzeug oder ein Lastkraftwagen, mit einer Mehrkreisschutzventileinrichtung (1) nach Anspruch 1 oder 2.

4. Fahrzeug, insbesondere Schienenfahrzeug oder Lastkraftwagen, mit einer Druckluftbremsanlage nach Anspruch 3.

5. Verfahren zum Betreiben einer Druckluftanlage mit wenigstens einer Mehrkreisschutzventileinrichtung (1) für druckluftbetätigte Aktuatoren, die die folgenden Merkmale aufweist:
- wenigstens einen Eingangsanschluß (4) zur Beaufschlagung mit Druckluft, wobei der Eingangsanschluß (4) mit einem Druckluftzentralbereich (12) in Verbindung steht,
- wenigstens einen ersten Ausgangsanschluß (20) zur Abgabe von Druckluft aus dem Zentralbereich (12), wobei zwischen dem ersten Ausgangsanschluß (20) und dem Zentralbereich (12) ein Rückschlagventil (13) angeordnet ist, das so angeordnet ist, daß es eine Rückströmung von Druckluft vom Zentralbereich (12) zum Eingangsanschluß (4) behindert, und
- wenigstens einen zweiten Ausgangsanschluß (23; 27, 28) zur Abgabe von Druckluft aus dem Zentralbereich (12) und
- eine Druckregelungseinheit (7), die eine Schaltstellung aufweist, die eine Druckbeaufschlagung des Zentralbereichs (12) zulässt,
wobei das Verfahren den Schritt des Beaufschlagens des Zentralbereichs mit Druckluft aufweist, wenn der Druck am ersten Ausgangsanschluß (20) unter einen vorbestimmten ersten Referenzwert fällt und wobei das Verfahren den Schritt des Beaufschlagens des Zentralbereichs (12) mit Druckluft aufweist, wenn der Druck an dem zweiten Ausgangsanschluß (23; 27, 28) unter einen vorbestimmten zweiten Referenzwert fällt.

## Claims

1. Multi-circuit protection valve device (1), particularly for actuators in a vehicle, which are operated by compressed air, provided with the following features:
- at least one supply port (4) for the application of compressed air, with this supply port (4) communicating with a central compressed-air zone (12),
- at least one first delivery port (20) for the delivery of compressed air from said central zone (12), with a check valve (17) being disposed between said first delivery port (20) and said central zone (12),
- at least one second delivery port (23; 27, 28) for the delivery of compressed air from said central zone (12),
- one controller (2) comprising several inputs for processing measuring signals in correspondence with the pressures applied to said first delivery port (20) and said at least one second delivery port (23; 27, 28), one output for controlling a pressure regulating unit (7) and a memory for a first and at least one second reference pressure,
wherein said controller (2) outputs a predetermined first control signal at its output for said pressure regulating unit (7) when the pressure at said first delivery port (20) is lower than said first reference pressure, with said pressure regulating unit (7) taking such a switching position, in dependence on said first control signal, that compressed air is applied to said central zone (12),
and wherein said controller (2) outputs at least one predetermined second control signal at its output for said pressure regulating unit (7) when the pressure at said at least one second delivery port (23; 27, 28) is lower than said at least one second reference pressure, with said pressure regulating unit (7) taking such a switching position, in dependence on said first control signal, that compressed air is applied to said central zone (12).

2. Multi-circuit protection valve device according to Claim 1,
**characterised in that**
a pressure limiting means (21) is provided between a second delivery port (23; 27, 28) and said central zone (12), which is adapted to be rendered inoperative by said controller (2).

3. Compressed-air brake system for a vehicle, in particular a rail vehicle or a truck, comprising a multi-circuit protection valve device (1) according to Claim 1 or 2.

4. Vehicle, in particular a rail vehicle or a truck, comprising a compressed-air brake system according to Claim 3.

5. Method of operating a compressed-air brake system including at least one multi-circuit protection valve device (1) for actuators operated by compressed air, which device is provided with the following features:
- at least one supply port (4) for the application of compressed air, with this supply port (4) communicating with a central compressed-air zone (12),
- at least one first delivery port (20) for the delivery of compressed air from said central zone (12), with a check valve (13) being disposed between said first delivery port (20) and said central zone (12), which check valve is so disposed that it will impede a return flow of compressed air from said central zone (12) to said supply port (4), and
- at least one second delivery port (23; 27, 28) for the delivery of compressed air from said central zone (12), and
- one pressure regulating unit (7) presenting a switching position that permits the application of pressure of said central zone (12),
wherein the method includes the step of application of compressed air to said central zone when the pressure at said first delivery port (20) drops below a predetermined first reference value and wherein the method includes the step of application of compressed air to said central zone (12) when the pressure at said second delivery port (23; 27, 28) drops below a predetermined second reference value.

## Revendications

1. Dispositif de valve de protection pour plusieurs circuits (1), en particulier pour actionneurs dans un véhicule, qui sont commandés par air comprimé, présentant les caractéristiques suivantes:
- au moins un raccord d'alimentation (4) pour l'alimentation en air comprimé, à ce raccord d'alimentation (4) se trouvant en communication avec une zone centrale d'air comprimé (12),
- au moins un premier raccord de distribution (20) pour le décharge d'air comprimé de ladite zone centrale (12), à une soupape de retenue (17) étant disposée entre ledit premier raccord de distribution (20) et ladite zone centrale (12),
- au moins un deuxième raccord de distribution (23; 27, 28) pour le décharge d'air comprimé de ladite zone centrale (12),
- une unité de commande (2) comprenant plusieurs entrées à traiter des signaux de mesure en correspondance avec les pressions appliquées audit premier raccord de distribution (20) et audit au moins un deuxième raccord de distribution (23; 27, 28), une sortie à commander une unité de réglage de pression (7) et une mémoire pour une première pression de référence et au moins une deuxième pression de référence,
dans lequel ladite unité de commande (2) sortit un premier signal de commande prédéterminé à sa sortie pur ladite unité de réglage de pression (7), quand la pression audit premier raccord de distribution (20) est plus basse que ladite première pression de référence, à unité de réglage de pression (7) prenant une telle position de distribution, en fonction dudit premier signal de commande, que de l'air comprimé soit appliqué à ladite zone centrale (12),
et dans lequel ladite unité de commande (2) sortit au moins un deuxième signal de commande prédéterminé à sa sortie pour ladite unité de réglage de pression (7), quand la pression audit au moins un deuxième raccord de distribution (23; 27, 28) est plus basse que ladite au moins seule deuxième pression de référence, à ladite unité de réglage de pression (7) prenant une telle position de distribution, en fonction dudit premier signal de commande, que de l'air comprimé soit appliqué à ladite zone centrale (12).

2. Dispositif de valve de protection pour plusieurs circuits selon la revendication 1, **caractérisé en ce**
**qu'**un moyen limiteur de pression (21) est disposé entre un deuxième raccord de distribution (23; 27, 28) et ladite zone centrale (12), qui est apte à être mis hors effet par ladite unité de commande (2).

3. Système de freinage à air comprimé pour un véhicule, en particulier un véhicule sur rails ou un camion, comprenant un dispositif de valve de protection pour plusieurs circuits (1) selon la revendication 1 ou 2.

4. Véhicule, en particulier un véhicule sur rails ou un camion, comprenant un système de freinage à air comprimé selon la revendication 3.

5. Procédé à faire fonctionner un système de freinage à air comprimé, qui renferme au moins un dispositif de valve de protection pour plusieurs circuits (1) pour des actionneurs commandés par air comprimé, ce dispositif présentant les caractéristiques suivantes :
- au moins un raccord d'alimentation (4) pour l'alimentation en air comprimé, à ce raccord d'alimentation (4) se trouvant en communication avec une zone centrale d'air comprimé (12),
- au moins un premier raccord de distribution (20) pour le décharge d'air comprimé de ladite zone centrale (12), à une soupape de retenue (13) étant disposée entre ledit premier raccord de distribution (20) et ladite zone centrale (12), cette soupape de retenue étant disposée d'une telle façon, qu'elle empêche un courant en retour de l'air comprimé de ladite zone centrale (12) vers ledit raccord d'alimentation (4), et
- au moins un deuxième raccord de distribution (23; 27, 28) pour le décharge d'air comprimé de ladite zone centrale (12), et
- une unité de réglage de pression (7) présentant une position de distribution, qui permet l'alimentation de ladite zone centrale (12) en pression,
dans lequel le procédé renferme l'étape d'alimentation en air comprimé vers ladite zone centrale, quand la pression audit premier raccord de distribution (20) tombe en dessous d'une première valeur de référence prédéterminée, et
dans lequel le procédé renferme l'étape d'alimentation en air comprimé vers ladite zone centrale (12), quand la pression audit deuxième raccord de distribution (23; 27, 28) tombe en dessous d'une deuxième valeur de référence prédéterminée.
